# EUROPÄISCHE PATENTSCHRIFT

(11) **EP 4 289 724 B1**
(45) Veröffentlichungstag und Bekanntmachung des Hinweises auf die Patenterteilung: **25.06.2025**
(21) Anmeldenummer: 22178169.3
(22) Anmeldetag: 09.06.2022
(51) Int. Cl.: B64C 1/40

(54) **BAUTEILHALTER**
COMPONENT HOLDER
PORTE-COMPOSANT

(43) Veröffentlichungstag der Anmeldung: 13.12.2023
(73) Patentinhaber: SFS Group International AG, 9435 Heerbrugg (CH)
(72) Erfinder: HEINEKE, Kai, 75385 Teinach / Zavelstein (DE); SCHENDEL, Olav, 70567 Stuttgart (DE)

(56) Entgegenhaltungen:
- WO-A1-2016/146716
- CN-A- 109 649 635
- US-A1- 2013 034 406
- US-A1- 2020 263 728
- US-B1- 7 584 582

## Beschreibung

Die vorliegende Erfindung befasst sich mit einem Bauteilhalter, der bevorzugt für den Einsatz in einem Luftfahrzeug ausgelegt ist, aber in ähnlicher Funktion auch in Landfahrzeugen eingesetzt werden kann. Insbesondere nützlich ist der Bauteilhalter zur Befestigung von Isolationsmaterial bzw. Isolationsmatten an Innenwänden von solchen Fahrzeugen.

### TECHNISCHER HINTERGRUND

Im Fahrzeugbau, insbesondere bei Luftfahrzeugen und bei Bahnfahrzeugen werden die Inneneinrichtungen nach der Fertigung des Rumpfes bzw. der Rohbaukarosserie als vormontierte Elemente eingebracht. Zwischen der Aussenhülle des Fahrzeugs und den vorgehängten Wänden können Kabelstrecken, Medienleitungen und Isolationen verbaut werden. Insbesondere zur thermischen Isolation und Geräuschdämmung werden grossflächige Matten an der Innenseite der Aussenwand angebracht und werden üblicherweise punktuell statt flächig befestigt. Das erleichtert die Montage und einen späteren Austausch. Es ist dabei bekannt, an bestimmten, konstruktiv dafür vorbereiteten Punkten einzelne Bauteilhalter anzubringen. An diesen werden beispielsweise Isolationsmatten, aber auch Kabelstränge oder andere Bauteile befestigt werden können. Ein Bauteilhalter bildet somit eine Art Ankerpunkt bzw. Schnittstelle für die mechanische Befestigung eines Bauteils an einem Untergrund wie der Tragstruktur eines Fahrzeugs.

### STAND DER TECHNIK

Um den Nachteil zusätzlicher Löcher insbesondere in der Tragstruktur von Flugzeugen zu vermeiden, wurde im Stand der Technik eine Vielzahl von speziellen Blechformteilen wie Winkel, Doppelwinkel, Z-Winkel oder Laschen vorgesehen, die an einem ihrer konstruktiven Enden bevorzugt an bereits vorgesehenen Nietpunkten mit angebracht wurden. Das andere Ende des Blechformteils weist dabei einen Befestigungspunkt auf, der die Isolationsmatten trägt. Dadurch wird vor allem auch erreicht, dass eine gewisse Distanz zwischen der Innenoberfläche des Rumpfes und der Isolationsmatte (bzw. dem zu befestigenden Bauteil) erzielt werden kann. Diese kann durch die Dimensionierung der o. a. Blechformteile eingestellt werden. Nachteilig ist hier, dass eine Vielzahl von verschiedensten Blechformteilen vorgehalten werden muss, um die beschriebene Flexibilität zu erreichen.

Im Stand der Technik US 2020 / 263728 A1 werden miteinander verbindbare Verriegelungsbauteile gezeigt, von denen jedes aus einem halbschaligen Unterteil und einem kugelförmigen Oberteil besteht. Das halbschalige Unterteil eines zweiten Verriegelungsbauteils kann daher auf das Oberteil eines ersten Verriegelungsbauteils aufgeschoben werden und schnappt dort wie bei einem Kugelgelenk ein. Das erste Verriegelungsbauteil kann damit relativ zum zweiten verkippt werden, soweit das Kugelgelenk das mechanisch zulässt.

Eine Besonderheit dieser Verriegelungsbauteile ist, dass das kugelförmige Oberteil eine Reihe achsparallel angeordneter Längskanäle aufweist, die am Umfang mit gleichem Abstand zueinander angeordnet sind. Die untere Halbschale weist in ihrem Inneren Rippen auf, die ebenfalls achsparallel angeordnet sind und eine gleichmässige Breite aufweisen. Diese Kombination aus Rippen und Kanälen greift beim Zusammenstecken zweier Verriegelungsbauteile ineinander und verhindert so, dass die beiden Verriegelungsbauteile relativ zueinander verdreht werden können, ohne jedoch das Verkippen zu stören.

Die Schrift US 7,584,582 beschreibt einen Bauteilhalter, dessen Basisteil flächig an einer Wand oder mittels Winkel an einer Spante befestigt werden kann. Er weist einen Schraubzapfen auf, auf den eine passende Öse als Bauteilhalter aufgeschoben wird. Die Öse wird gehalten durch eine Haltescheibe, die durch die Öse hindurch auf den Schraubzapfen aufgeschraubt wird.

Das Dokument US 2013/034 406 A1 zeigt eine Schraube mit schwingungsdämpfenden Eigenschaften. Ein erstes Teilelement des Schraubenkörpers kann über ein Gewinde im Endbereich in ein Basisteil eingeschraubt werden. Ein Bauteilhalter wird zwischen dem ersten und einem zweiten Teilelement gehalten, wobei der Bauteilhalter nicht geklemmt, sondern magnetisch in der Schwebe gehalten wird. In jedem Teilelement ist je ein Magnet so angeordnet, dass ein dritter Magnet, der im Bauteilhalter verbaut ist und zwischen den anderen Magneten angeordnet wird, von diesen eine abstossende Kraft erfährt.

Die Aufgabe der Erfindung besteht darin, einen modularen Bauteilhalter zur Verfügung zu stellen, der die Vorteile des Standes der Technik weiterführt, aber dessen Komplexität vermeidet.

### BESCHREIBUNG DER ERFINDUNG

Ein solcher Bauteilhalter gemäß Anspruch 1 ist modular aufgebaut und umfasst ein Basisteil und ein mit dem Basisteil verriegelbares Aufsteckelement mit einer daran angeordneten Bauteilaufnahme. Das Basisteil ist zur Befestigung an der Tragstruktur des Fahrzeugs vorgesehen und wird auch zunächst einzeln an seinem dafür vorgesehenen Ansatzpunkt angebracht. Das passende Aufsteckelement kann zu einem späteren Zeitpunkt mit dem Basisteil durch Verriegeln verbunden werden. Insbesondere sind für diese Art der Verriegelung keine weiteren Sicherungen wie Stifte, Befestiger oder Verklebungen notwendig. Mit Verriegeln seien Verbindungen wie Bajonettverschlüsse, Schnapp- und Rastverbindungen sowie Clips gemeint. Bevorzugt wird eine Verriegelung in der Art eines Bajonettverschlusses vorgesehen.

Die mechanische Schnittstelle, also die Art und Dimensionierung der Verriegelungselemente sind bei vorgegebenem Basisteil für alle Aufsteckelemente gleich. Somit können unterschiedlich ausgestaltete Basisteile je nach Einsatz (e.g. an der Tragstruktur eines Flugzeugrumpfs oder an Wänden, Kanten oder an Spanten) mit einem Aufsteckelement aus einer ganzen Vielzahl unterschiedlicher Varianten verbunden werden. Dabei bezieht sich "unterschiedlich" sowohl auf die Bauhöhe, Bauform wie auch auf die Art der Bauteilaufnahme. Identisch bleibt jeweils die mechanische Schnittstelle.

Das Basisteil weist hierzu eine im Wesentlichen schalenförmige, kreisrunde Grundform auf, wobei der obere Rand dieser Schale besagte Halte- und Verriegelungselemente aufweist. Mit oben ist hierbei das - im verbauten Zustand - freie Ende mit der Schnittstelle gemeint, das untere Ende entspräche der Verbindungsebene bzw. -fläche mit einer Wand oder Unterkonstruktion. Hergestellt wird ein Basisteil bevorzugt aus Kunststoff durch Spritzguss. Denkbar ist aber auch eine Ausführung aus Metall wie Aluminium durch Tiefziehen, Pressen und Stanzen. Auch eine Kombination ist möglich, als kunststoff-umspritztes Metallteil.

Das verriegelbare Aufsteckelement besitzt einen im Wesentlichen kuppelförmigen Grundaufbau. Kuppelförmig bzw. Kuppel meint hiermit eine im Wesentlichen halbschalige Grundform mit einem unteren, geschlossenen Ring als Rand und eine diesen Rand überspannende Wölbung. Diese Wölbung wird hierbei nicht als perfekte, geschlossene Kugelschale ausgebildet, sie wird aus Rippen bzw. Spanten oder aus Facetten-Flächen aufgebaut. Die Höhe der Kuppel, also der Abstand des Zenits der Kuppel auf die vom Rand definierte Ebene kann je nach Aufgabe und Einsatzzweck des Bauteilhalters variieren und ist ein erfinderischer Vorteil.

Der untere Randbereich der Kuppel weist dabei Halte- und Verriegelungselemente auf, die mechanisch und funktionell komplementär zu denjenigen des Basisteils ausgelegt sind und mit diesen verriegelnd zusammenwirken können. Im Sinne der soeben gemachten Ausführungen bildet dieser untere Rand demnach die Ergänzung zur mechanischen Schnittstelle des Basisteils. Der obere Rand der Schale und der untere Rand der Kuppel wirken also beim Verriegeln zusammen.

Es sei betont, dass die Ausführung als "Schale mit aufsteckbarer, verriegelbarer Kuppel" einige spezifische Vorteile gegenüber dem Stand der Technik bietet. Die Kraftableitung von der Bauteilaufnahme in den Untergrund (Innenwand, Unterkonstruktion) erfolgt im Gegensatz zu einer zentralen Verriegelung z.B. über einen Dorn, hier über die Ränder von Kuppel und Schale. Zug- und Druckspannungen sowie Kippmomente werden in alle Richtungen gleichermassen gut verteilt und abgeleitet. Materialwahl und Gestaltung der Bauteilaufnahme bzw. der Kuppel können gezielt elastisch wie auch steif ausgelegt werden.

Die Bauteilaufnahme ist am Aufsteckelement integral angeformt und stellt die mechanische Verbindung zwischen dem Aufsteckelement und dem zu montierenden Bauteil des Fahrzeugs zur Verfügung.

Die integrale Verbindung begünstigt die Krafteinleitung von der Bauteilaufnahme in die Kuppel. Insbesondere wird die Bauteilaufnahme im Zenit der Kuppel auf der Aussenseite angeordnet sein und damit von der Kuppel wegweisen, senkrecht zu der Ebene, die durch den unteren Randbereich des Aufsteckelements definiert wird.

Um die oben beschriebene symmetrische Kraftableitung zu gewährleisten, wird die Kuppel aus mindestens drei am Umfang winklig versetzten Spanten gebildet. Mit Spanten sind dabei Stege gemeint mit einem beispielsweise runden, rechteckigen bzw. rohr- oder u-förmigen Querschnitt. Diese Spanten verlaufen ausgehend vom unteren Randbereich der Kuppel zum Fusspunkt der Bauteilaufnahme im Zenit der Kuppel. Mit Zenit ist dabei der Scheitelpunkt der Kuppel gemeint; auf der Aussenseite der Kuppel befindet sich im Scheitelpunkt der Fusspunkt der Bauteilaufnahme.

Besonders bevorzugt wird die Kuppel aus vier um je 90° (am Umfang) versetzten Spanten gebildet. Diese Auslegung hat sich in Bezug auf Verwindungssteifigkeit und Materialverbrauch als vorteilhaft erwiesen.

Die Ausbildung mit Spanten zwischen dem unteren Rand der Kuppel und deren Scheitelpunkt / Zenit hinterlässt je nach Breite der Spanten Bereiche bzw. Flächen zwischen benachbarten Spanten und dem unteren Randbereich der Kuppel, die eine im Wesentlichen gewölbte Dreiecksform aufweisen. Diese Felder sind als materialfreie Durchbrüche gestaltet. Dadurch werden Material und Gewicht eingespart, ohne die strukturelle Festigkeit zu beeinträchtigen. Eine Art dünne Membran in diesen Feldern kann vorgesehen werden, sollte dies technisch notwendig sein.

Vorteilhaft wird man das Aufsteckelement als Spritzgusselement in Kunststoff ausführen. Für den Fachmann geläufig, können heute die Eigenschaften eines Kunststoffes in weiten Grenzen eingestellt werden. So lassen sich durch Zuschlagstoffe Eigenschaften wie (Kalt-)Zähigkeit, Widerstand gegen Lösemittel oder Feuerfestigkeit beeinflussen. Insbesondere Zuschlagstoffe wie Glas- oder Kohlefasen lassen hochfeste Ausführungen von Aufsteckelementen zu. Beispiele für solche Kunststoffe sind PEEK, PPS und PEI.

Bevorzugt wird der Boden der Schale bzw. des Basisteils eine zentrale kreisrunde Öffnung aufweisen, die die Durchführung eines Befestigers erlaubt, mit dem das Basisteil an einer Innenwand bzw. Unterkonstruktion befestigt wird. Um die Modularität des Systems weiter zu erhöhen, kann man vorsehen, dass das Basisteil im Boden der Schale eine zentrisch angeordnete Aufnahmeöffnung für einen Adapterring aufweist. Damit kann eine Schale alternativ mit verschiedenen Adapterringen versehen werden, was den Einsatz mit einer Vielzahl von unterschiedlich dimensionierten Befestigern erlaubt. Zusätzlich kann der Adapterring als isolierendes Bauteil ausgeführt sein, das formschlüssig in die Aufnahmeöffnung einsetzbar ist. Besonders bevorzugt wird der Adapterring durch einen Klemmsitz in der Aufnahmeöffnung gehalten. Diese Verliersicherung erhöht die Handhabungssicherheit.

Der Adapterring kann, je nach Auslegung, auch rohrförmige Elemente aufweisen (zur Führung eines Befestigers) oder auch Dichtungselemente, Rippen oder andere Funktionselemente.

Aus dem bisher Beschriebenen geht hervor, dass durch das Schale-Kuppel Prinzip im montierten Zustand von Basisteil, Aufsteckelement und Adapterring ein gemeinsamer Innenraum mit einem gemeinsamen Innenvolumen gebildet wird. Dieser umschliesst wie ein Käfig den Kopf eines Befestiger für das Basisteil. Dadurch wird einerseits der Kopf des Befestigers geschützt, aber auch beispielsweise die einzubringenden Isolationsmatten. Die Kuppelform erlaubt der Matte bzw. einem befestigten Bauteil eine abgerundete Auflagefläche im montierten Zustand.

Die eigentliche Bauteilaufnahme auf der Aussenseite des Aufsteckelements wird speziell bei den Isolationsmatten als ein Dorn ausgeführt mit einer Mehrzahl ringförmig am Schaft angeordneter Rastelemente. Die Isolationsmatten für Flugzeuge sind zumeist vorkonfektionierte, flexible, flächige Matten und tragen an den vorgesehenen Befestigungspunkten Ösen zum Durchstecken von Dornen der beschrieben Art. Die (lösbare) Befestigung erfolgt dann durch Ringe, die über die Dorne geschoben werden und sich mit einem Rastelement verhaken. Alternativ kann die Öse selbst mit den Rastelementen zusammenwirken. Die Länge des Dorns variiert je nach Dicke und Art der Isolationsmatte (thermische oder elektrische Isolation und/oder akustische Absorptionsschicht).

Alternativ kann eine Bauteilaufnahme auch als Öse, als Schraubenelement mit Aussengewinde, als Mutternelement mit Innengewinde, als Klemme oder Klebepunkt, als Kabelhalter, als Rohr- oder Leitungsführung ausgeführt werden.

### KURZBEZEICHNUNG DER FIGUREN

Figur 1 zeigt das Basisteil eines Bauteilhalters.
Figur 2 zeigt exemplarisch einen Adapterring.
Figur 3 zeigt eine erste Ausführungsform eines Aufsteckelements in schräger Draufsicht.
Figur 4 zeigt eine zweite Ausführungsform eines Aufsteckelements mit Weglassungen.
Figur 5 zeigt einen Teil-Querschnitt durch die erste Ausführungsform mit einigen Weglassungen.
Figur 6 zeigt eine dritte Ausführungsform in Schrägansicht.
Figur 7 zeigt die zweite Ausführungsform in Schrägansicht mit Details.

### BESCHREIBUNG DER FIGUREN

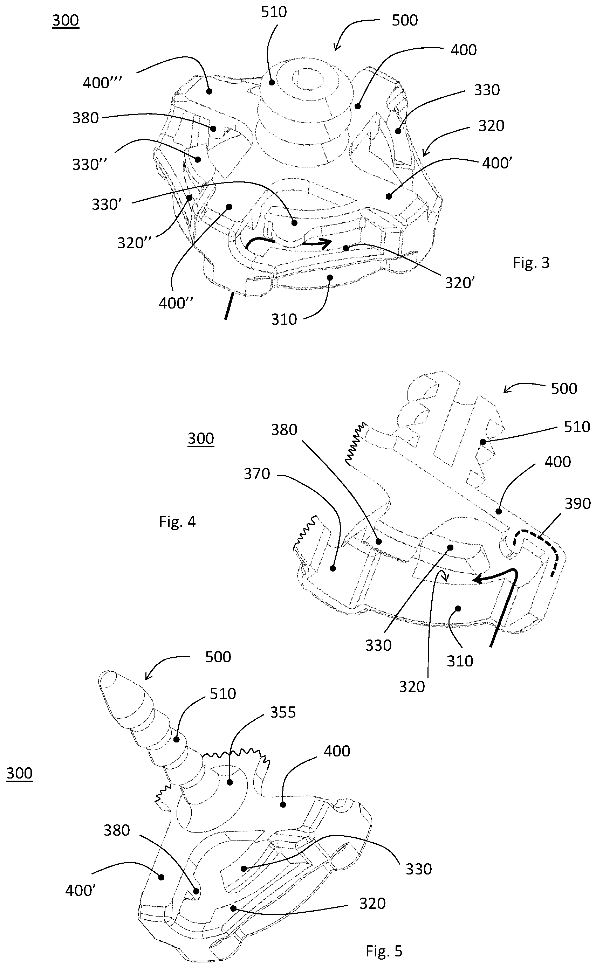

Die Figuren zeigen verschiedene Ausführungsformen von Basisteil 100 und Aufsteckelementen 300, die zusammen die Grundkonfiguration eines Bauteilhalters bilden. Die Merkmale der Figuren 3 bis 7 sind funktionell gleich, jedoch strukturell in verschiedenen Varianten und Perspektiven gezeigt. Um Wiederholungen zu vermeiden, wird teilweise nur mehr auf die relevanten Unterschiede verwiesen.

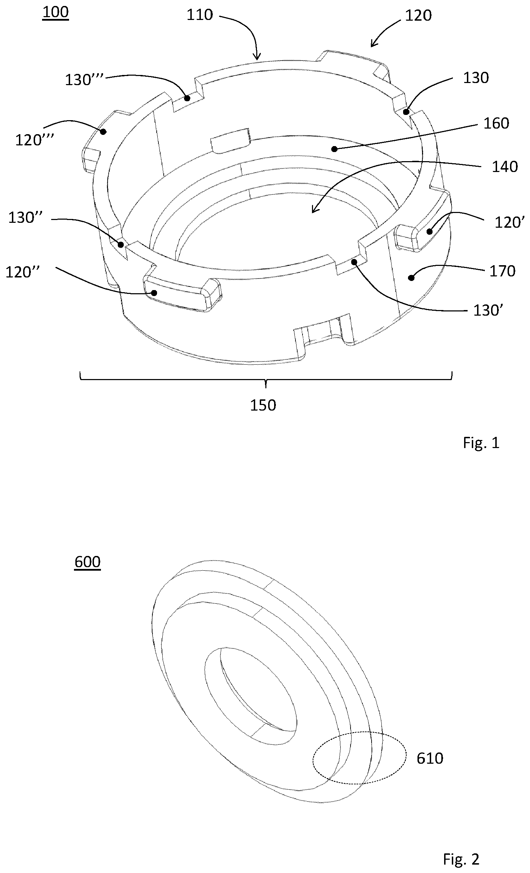

Figur 1 zeigt ein Basisteil 100 mit seinem schalenförmigen Grundaufbau. In der gezeigten Ausführungsform besteht die Schale 150 aus einem ebenen Boden 160 und einer zylindrischen Seitenwand 170. Der Boden 160 weist eine (hier abgestufte) Aufnahmeöffnung 140 für einen Adapterring 600 auf. Der obere Rand 110 der Schale 150 bzw. des Basisteils 100 ist hier mit je vier Haltelementen 120, 120',... und Verriegelungselementen 130, 130',... gezeigt. Diese sind je paarweise am Umfang hintereinander angeordnet, und bilden einen ersten Teil von vier Verriegelungseinheiten eines Bajonettverschlusses. Die Halteelemente 120, 120', ... sind dargestellt als radial nach aussen vorkragende Zapfen. Die Verriegelungselemente 130 sind als rechteckige Einschnitte im oberen Abschlussrand 110 der Seitenwand 170 gezeigt. Das Zusammenwirken mit einem Aufsteckelement 300 wird weiter unten erläutert.

Figur 2 zeigt einen Adapterring 600 zum Einsetzen in die Aufnahmeöffnung 140 eines Basisteils 100. Er ist dargestellt mit einer Abstufung 610, die eine präzisere Zentrierung und verbesserte Lastverteilung in einer Aufnahmeöffnung, wie in Figur 1 gezeigt, erlaubt.

Figur 3 zeigt die erste Ausführungsform eines Aufsteckelementes in einer Ansicht von schräg oben. Von oben nach unten ist erkennbar die Bauteilaufnahme 500, die als kurzer Dorn mit drei ringförmigen Rastelementen 510 ausgeführt ist. Die Bauteilaufnahme geht über in den Zenit der Kuppel, die hier aus vier Spanten 400, 400' bis 400‴ gebildet wird. Die Form der Kuppel ist hier als eher flache Haube angelegt. Die Spanten 400 bis 400‴ münden in einen gemeinsamen Randbereich 310, der den unteren Abschluss des Aufsteckelements 300 bildet. Der obere Rand des Randbereichs ist komplex gestaltet und bietet verschiedene Anschlagflächen, die hier als Haltelemente 330 fungieren. Rastzungen übernehmen die Funktion der Verriegelungselemente. 320 ... 320"'.

Die Rastzungen und Anschlagflächen sind die Funktionspartner der vorkragenden Zapfen (Haltelemente 120) und Einschnitte (Verriegelungselement 120) im Basisteil 100 gemäss Figur 1.

Der dick ausgezogene Pfeil in Figur 3 und 4 beschreibt den Bewegungsablauf des Zusammenfügens von Aufsteckelement 300 und Basisteil 100. Er lässt sich anhand Figur 4 besser verstehen.

In Figur 4 ist nur ein Viertel eines Aufsteckelementes 300 in einer Ansicht von schräg unten dargestellt. Der dicke Pfeil hilft, das Zusammenspiel der Halte- und Verriegelungselement 120, 130, 320, 330 (...) zu verstehen. Der untere Rand 310 des Aufsteckelementes 300 weist ebenso viele Führungsschlitze 370 auf wie das zugehörige Basisteil 100 Haltelemente 120 (Zapfen) hat. Die Führungsschlitze 370 sind hier als radial nach aussen weisende Vertiefungen im unteren Randbereich 310 der Kuppel dargestellt; die Breite und Tiefe sind etwas grösser gewählt als die Dimensionen der Zapfen (Halteelemente 120) des Basisteils. Die Orientierung der Führungsschlitze 370 ist vertikal, bezogen auf die Ebene definiert durch den Randbereich 310 des Aufsteckelements 300.

Der kleinste Innendurchmesser des Randbereichs 310 ist etwas grösser gewählt als der Durchmesser der Schale 150 am oberen Rand 110 (gemessen ohne die Zapfen / Haltelemente 120, ...), so dass das Aufsteckelement 300 passend auf das Basisteil aufgeschoben werden kann. An der Innenseite der Kuppel wird aus einer Führungsleiste 380, hier als Teil der Spante 400 ausgeführt, dem randnahen Teil des Spants 400 und dem oberen Bereich des Randes 310 eine U-förmige Nut 390 gebildet. Im verbauten Zustand schlägt in dieser Nut 390 der obere Rand 110 des Basisteils 100 an, die Nut dient also als Tiefenbegrenzung bei der Montage. In dieser Position kann der Zapfen (Haltelement 120, in Figur 4 nicht gezeigt) durch eine Drehbewegung weiter in Pfeilrichtung über den Rand 310 des Aufsteckelements 300 geschoben werden. Dieser obere Abschluss des Randes 310 bildet damit das Halteelement 320 für den Zapfen (Haltelement 120 des Basisteils 100). Gleichzeitig gleitet das als federnder Finger ausgebildete Verriegelungselement 330 über den oberen Rand 110 des Basisteils 100 bis es in eine Vertiefung (Verriegelungselement 130) einrasten kann und somit die relative Position von Aufsteckelement 300 und Basisteil 110 fixiert und ein selbsttätiges Lösen verhindert. Je nach Auslegung des Aufsteckelements und Wahl der Verriegelung kann die Auslegung ähnlich oder anders erfolgen. Die in der vorliegenden Erfindung realisierten Vorteile sind eine werkzeuglose Montage und eine selbstsichernde Verriegelung. Je nach Aufgabe kann sie als lösbare oder nicht mehr lösbare Verriegelung realisiert werden. Der bevorzugte Weg hier ist ein Bajonettverschluss mit den beschriebenen Elementen.

In Figur 3 ist das Verriegelungselement 330' mit einer kleinen halbrunden Lasche versehen. Die ermöglicht diese Verriegelung durch Anheben zu lösen.

In Figur 5 ist ein Aufsteckelement gezeigt, dessen Kuppel die Form von Figur 3 und 4 übernimmt, aber eine andere Bauteilaufnahme 500 zeigt. Der Dorn ist schlanker ausgeführt und sein Fusspunkt 350 geht kelchartig in den Zenit der Kuppel über. Die Rastelemente am Dorn sind flacher ausgeführt. Diese Ausführung empfiehlt sich insbesondere bei einem etwas elastischeren Dorn / Bauteilaufnahme 500, weil der Kelchfuss die Einleitung von Kräften in die Kuppel verbessert. Die Verriegelungselemente und Spantenanordnung entsprechen Figur 3 und 4, ebenso die Funktionalität.

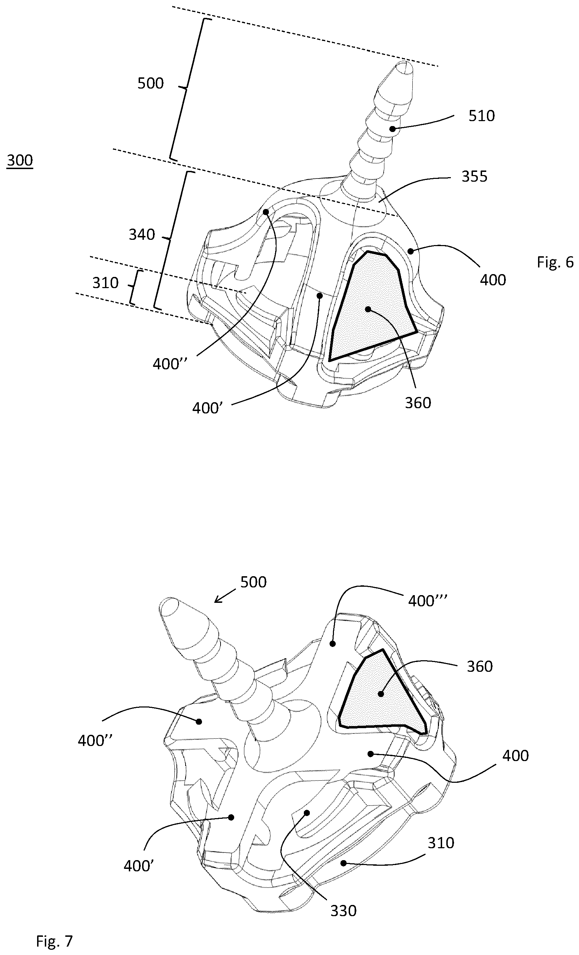

Figur 6 zeigt ein Aufsteckelement 300 mit einer stärker gewölbten Kuppel 340 als die Figuren 3-5. Die Spanten 400, 400',.. weisen eine an eine S-Kurve erinnernde Form auf und laufen am Fusspunkt 355 der Bauteilaufnahme 500 zusammen. In dieser Figur wurde auch schematisch die Fläche 360 markiert, die die Felder zwischen zwei benachbarten Spanten 400, 400' und dem unteren Rand 310 beschreibt. Das Feld ist ähnlich der S-Form der Spanten 400 gewölbt mit einer abgerundeten Spitze nahe dem Fusspunkt 355.

In Figur 7 ist das Feld 360 stärker gestaucht aufgrund der flacheren Kuppel des Aufsteckelementes 300 (ähnlich Figur 5).

## Patentansprüche

1. Bauteilhalter umfassend
- ein Basisteil (100) und ein mit dem Basisteil (100) verriegelbares Aufsteckelement (300) mit einer daran angeordneten, integral angeformten Bauteilaufnahme (500), wobei
- das Basisteil (100) eine im Wesentlichen schalenförmige, kreisrunde Grundform aufweist, wobei der obere Rand (110) dieser Schale Halte- und Verriegelungselemente (120, 120', ... 130, 130',...) aufweist; und
- das verriegelbare Aufsteckelement (300) einen im Wesentlichen kuppelförmigen Grundaufbau (340) besitzt, wobei der untere Randbereich (310) der Kuppel (340) Halte- und Verriegelungselemente (320, 320',.., 330, 330'...) aufweist, die mechanisch und funktionell komplementär zu denjenigen des Basisteils (100) ausgelegt sind und mit diesen verriegelnd zusammenwirken können, **dadurch gekennzeichnet, dass**
- die Kuppel (340) aus mindestens drei am Umfang winklig versetzten Spanten (400, 400'...) gebildet wird und diese Spanten ausgehend vom unteren Randbereich (310) der Kuppel (340) zum Fusspunkt der Bauteilaufnahme im Zenit (350) der Kuppel (340) verlaufen, und
- Felder (360, 360'...) zwischen je zwei benachbarten Spanten (400, 400', ...) und dem unteren Randbereich der Kuppel (310) als materialfreie Durchbrüche gestaltet sind und eine im Wesentlichen gewölbte Dreiecksform aufweisen.

2. Bauteilhalter nach Anspruch 1, **dadurch gekennzeichnet, dass** die Bauteilaufnahme im Zenit (350) der Kuppel (340) auf der Aussenseite angeordnet ist und in eine Richtung von der Kuppel (340) wegweist, die normal zur Ebene verläuft, die durch den unteren Randbereich (310) des Aufsteckelements (300) definiert wird.

3. Bauteilhalter nach Anspruch 1-2, **dadurch gekennzeichnet, dass** die Kuppel (340) aus vier um je 90° versetzten Spanten (400, 400', 400", 400"') gebildet wird.

4. Bauteilhalter nach einem oder mehreren der vorigen Ansprüche, **dadurch gekennzeichnet, dass** das Aufsteckelement (300) als Spritzgusselement in Kunststoff ausgeführt ist.

5. Bauteilhalter nach einem oder mehreren der vorigen Ansprüche, **dadurch gekennzeichnet, dass** das Basisteil (100) i) aus Kunststoff durch Spritzguss, ii) aus Metall durch Stanzen, Tiefziehen, Pressen oder iii) als kunststoff-umspritztes Metallteil hergestellt wird.

6. Bauteilhalter nach einem oder mehreren der vorigen Ansprüche, **dadurch gekennzeichnet, dass** das Basisteil (100) im Boden der Schale eine zentrisch angeordnete Aufnahmeöffnung (140) für einen Adapterring (600) aufweist.

7. Bauteilhalter nach einem oder mehreren der vorigen Ansprüche, **dadurch gekennzeichnet, dass** der Adapterring (600) als isolierendes Bauteil ausgeführt ist, das formschlüssig in die Aufnahmeöffnung (140) einsetzbar ist.

8. Bauteilhalter nach Anspruch 6, **dadurch gekennzeichnet, dass** der Adapterring (600) durch einen Klemmsitz in der Aufnahmeöffnung (140) gehalten wird.

9. Bauteilhalter nach einem oder mehreren der vorigen Ansprüche, **dadurch gekennzeichnet, dass** im montierten Zustand von Basisteil (100), Aufsteckelement (300) und Adapterring (600) der Innenraum der Schale und der Innenraum der Kuppel ein gemeinsames Innenvolumen bilden.

10. Bauteilhalter nach einem oder mehreren der vorigen Ansprüche, **dadurch gekennzeichnet, dass** die Bauteilaufnahme (500) als ein Dorn ausgeführt wird mit einer Mehrzahl ringförmiger Rastelemente (510, 510'...).

11. Bauteilhalter nach einem oder mehreren der Ansprüche 1 bis 9, **dadurch gekennzeichnet, dass** die Bauteilaufnahme (500) als Öse, als Schraubenelement mit Aussengewinde, als Mutternelement mit Innengewinde, als Klemme, Klebepunkt, als Kabelhalter, als Rohr- oder Leitungsführung ausgeführt ist.

12. Bauteilhalter nach einem oder mehreren der Ansprüche 1-10, **dadurch gekennzeichnet, dass** die Bauteilaufnahme (500) dazu ausgelegt ist, mit einer flexiblen, flächigen Matte verbunden zu werden, die als thermische oder elektrische Isolation und/oder akustische Absorptionsschicht ausgelegt ist.

## Claims

1. Component holder, comprising
- a base part (100) and a plug-in element (300) that can be locked to the base part (100), having a component receptacle (500) arranged on and integrally formed with the plug-in element (300),
- the base part (100) has a substantially shell-shaped, circular basic shape, wherein the upper edge (110) of this shell has holding and locking elements (120, 120', ... 130, 130', ...); and
- the lockable plug-in element (300) has a substantially dome-shaped basic structure (340), wherein the lower edge region (310) of the dome (340) has holding and locking elements (320, 320', ... 330, 330'...) which are designed to be mechanically and functionally complementary to those of the base part (100) and can interact with the latter in a locking manner,
**characterized in that**
- the dome (340) is formed from at least three frames (400, 400', ...) that are angularly offset at the periphery and these frames extend from the lower edge region (310) of the dome (340) to the base point of the component receptacle at the zenith (350) of the dome (340), and
- fields (360, 360'...) between two adjacent frames (400, 400', ...) each and the lower edge region of the dome (310) are designed as material-free openings and have a substantially curved triangular shape.

2. Component holder according to claim 1, **characterized in that** the component receptacle is arranged on the outside at the zenith (350) of the dome (340) and points in a direction away from the dome (340), which direction extends normal to the plane defined by the lower edge region (310) of the plug-in element (300).

3. Component holder according to claims 1-2, **characterized in that** the dome (340) is formed from four frames (400, 400', 400", 400‴) offset by 90° in each case.

4. Component holder according to one or more of the preceding claims,
**characterized in that** the plug-in element (300) is designed as an injection-molded element made of plastic.

5. Component holder according to one or more of the preceding claims,
**characterized in that** the base part (100) is produced i) from plastic by injection molding, ii) from metal by punching, deep drawing, pressing or iii) as a metal part that is encapsulated in plastic.

6. Component holder according to one or more of the preceding claims,
**characterized in that** the base part (100) has a centrally arranged receiving opening (140) for an adapter ring (600) in the bottom of the shell.

7. Component holder according to one or more of the preceding claims,
**characterized in that** the adapter ring (600) is designed as an insulating component that can be inserted in a form-fitting manner into the receiving opening (140).

8. Component holder according to claim 6, **characterized in that** the adapter ring (600) is held in the receiving opening (140) by an interference fit.

9. Component holder according to one or more of the preceding claims,
**characterized in that** in the assembled state of the base part (100), plug-in element (300) and adapter ring (600), the interior of the shell and the interior of the dome form a common internal volume.

10. Component holder according to one or more of the preceding claims,
**characterized in that** the component receptacle (500) is designed as a mandrel having a plurality of annular latching elements (510, 510'...).

11. Component holder according to one or more of claims 1 to 9, **characterized in that** the component receptacle (500) is designed as an eyelet, as a screw element with an external thread, as a nut element with an internal thread, as a clamp, as an adhesive point, as a cable holder, as a conduit or cable guide.

12. Component holder according to one or more of claims 1-10, **characterized in that** the component receptacle (500) is designed to be connected to a flexible, flat mat which is designed as a thermal or electrical insulation and/or acoustic absorption layer.

## Revendications

1. Fixation de composant comprenant :
- une partie de base (100) et un élément emboîté (300) verrouillable avec la partie de base (100), sur lequel un élément recevant le composant (500) est disposé et formé d'un seul tenant,
- dans lequel la partie de base (100) a pour l'essentiel la forme d'une coquille circulaire, la région de bord supérieure (110) de cette coquille comportant des éléments de maintien et de verrouillage (120, 120', ... 130, 130', ...), et
- l'élément emboîté verrouillable (300) a une structure de base (340) en forme de dôme pour l'essentiel, la région de bord inférieure (310) du dôme (340) comportant des éléments de maintien et de verrouillage (320, 320', ... 330, 330', ...) conçus pour être complémentaires de ceux de la partie de base (100) du point de vue fonctionnel et mécanique et pouvant coopérer avec ceux-ci en vue d'un verrouillage,
**caractérisée en ce que**
- le dôme (340) est formé par au moins trois membrures (400, 400'...) décalées d'un angle sur la circonférence et ces membrures s'étendent, à partir de la région de bord inférieure (310) du dôme (340), vers le pied de l'élément recevant le composant au zénith (350) du dôme (340) et
- des zones (360, 360', ...) entre deux membrures (400, 400', ...) voisines et la région de bord inférieure du dôme (310) sont conformées comme des percées sans matériau et présentent une forme sensiblement triangulaire et bombée.

2. Fixation de composant selon la revendication 1, **caractérisée en ce que** l'élément recevant le composant est disposé au zénith (350) du dôme (340) sur l'extérieur et tourné à l'opposé du dôme (340) dans une direction perpendiculaire au plan défini par la région de bord inférieure (310) de l'élément emboîté (300).

3. Fixation de composant selon la revendication 1-2, **caractérisée en ce que** le dôme (340) est formé de quatre membrures (400, 400', 400", 400"') décalées respectivement de 90°.

4. Fixation de composant selon une ou plusieurs des revendications précédentes, **caractérisée en ce que** l'élément emboîté (300) est réalisé comme un élément moulé par injection en matière plastique.

5. Fixation de composant selon une ou plusieurs des revendications précédentes, **caractérisée en ce que** la partie de base (100) est fabriquée i) en matière plastique, par moulage par injection, ii) en métal, par découpe à l'emporte-pièce, emboutissage, pressage, ou iii) sous la forme d'une pièce métallique plastifiée par injection.

6. Fixation de composant selon une ou plusieurs des revendications précédentes, **caractérisée en ce que** la partie de base (100) comporte, dans le fond de la coquille, une ouverture de logement (140) centrale pour une bague d'adaptation (600).

7. Fixation de composant selon une ou plusieurs des revendications précédentes, **caractérisée en ce que** la bague d'adaptation (600) est réalisée comme un composant isolant qui peut être inséré en correspondance de forme dans l'ouverture de logement (140).

8. Fixation de composant selon la revendication 6, **caractérisée en ce que** la bague d'adaptation (600) est retenue par calage dans l'ouverture de logement (140).

9. Fixation de composant selon une ou plusieurs des revendications précédentes, **caractérisée en ce que**, dans l'état monté de la partie de base (100), de l'élément emboîté (300) et de la bague d'adaptation (600), l'espace intérieur de la coquille et l'espace intérieur du dôme forment un volume intérieur commun.

10. Fixation de composant selon une ou plusieurs des revendications précédentes, **caractérisée en ce que** l'élément recevant le composant (500) est réalisé comme un mandrin muni de plusieurs éléments d'enclenchement annulaires (510, 510', ...).

11. Fixation de composant selon une ou plusieurs des revendications 1 à 9, **caractérisée en ce que** l'élément recevant le composant (500) est réalisé comme un œillet, comme un élément de vis avec un filetage extérieur, comme un élément d'écrou avec un filetage intérieur, comme un serrage, un point de collage, un serre-câble, un tracé de tuyau ou de conduite.

12. Fixation de composant selon une ou plusieurs des revendications 1 à 10, **caractérisée en ce que** l'élément recevant le composant (500) est dimensionné pour être relié à un tapis flexible et plan conçu comme une isolation thermique ou électrique et/ou comme une couche d'absorption acoustique.
